# EUROPEAN PATENT SPECIFICATION

(11) **EP 3 471 001 B1**
(45) Date of publication and mention of the grant of the patent: **05.07.2023**
(21) Application number: 17195728.5
(22) Date of filing: 10.10.2017
(51) Int. Cl.: H04L 51/212, H04L 51/52, G06F 21/31

(54) **AUTHENTICATION IN SOCIAL MESSAGING APPLICATION**
AUTHENTIFIZIERUNG IN EINER SOZIALEN MESSENGER ANWENDUNG
AUTHENTIFICATION DANS UNE APPLICATION DE MESSAGERIE SOCIALE

(43) Date of publication of application: 17.04.2019
(73) Proprietor: Nokia Technologies Oy, 02610 Espoo (FI)
(72) Inventor: RAJAPANDIYAN, Karthick, 600044 Tamilnadu (IN); SADIQ, Aamir, 600096 Tamil Nadu (IN)
(74) Representative: Laine IP Oy

(56) References cited:
- US-A1- 2005 041 789
- US-A1- 2005 204 005
- US-A1- 2013 097 261

## Description

### FIELD OF INVENTION

The present subject matter generally relates to social messaging applications.

### BACKGROUND

Many social networking applications or social messaging applications allow unauthorized access or downloading of potential inappropriate content from mobile devices. Currently it is possible to lock the mobile device or the application, but while using the application, there is no control of potential inappropriate content that can be streamed or downloaded.

There is a need to prevent unauthorized access or downloading of potential inappropriate while using the social messaging application.

### SUMMARY

This summary is provided to introduce concepts related to the present inventive subject matter. This summary is not intended to identify essential features of the claimed subject matter nor is it intended for use in determining or limiting the scope of the claimed subject matter. In one implementation, a method for authenticating a user of a client messaging application implemented in a mobile device and communicating with a server messaging application implemented in an application server through a wireless telecommunication network, the method comprising the following steps in a middleware apparatus operating between the client messaging application and the server messaging application:
monitoring the server messaging application for a received multimedia content,
sending a part of said received multimedia content to a control server for an analysis of the part of said multimedia content,
receiving results of the analyzed part of said multimedia content from the control server,
if the received results are negative, requesting an authentication of the user,
allowing the user to access the received multimedia content via the client messaging application if the authentication is successful.
US2005204005 discloses system and method that mitigates viewing potentially offensive or spam-like content such as in a preview pane. In particular the system and/or method involve assigning a junk score to a message and then determining an appropriate treatment of the message based on its junk score. Messages with junk scores that exceed a challenge threshold can be hidden from a message listing such as in the user's inbox while a challenge is sent to the message sender. Upon receiving a validated and correct response from the sender, the message can be released or revealed to the user in the user's inbox. Content associated with messages with junk scores that exceed a blocking threshold can be blocked from view in a preview pane. Explicit user input can be required to unblock the content.

Advantageously, the authentication prevents the downloading/streaming of potential inappropriate content while using a client messaging application.

In an embodiment, the part of the multimedia content corresponds to the entire multimedia content.

In an embodiment, requesting an authentication of the user comprises commanding the client messaging application in the mobile device to prompt the user to enter a password or a biometric input is associated with a plurality of parameters.

In an embodiment, the received results are negative when the received results are above a given threshold or when the received results contain an indication for a required authentication.

In an embodiment, the authentication of the user is requested by triggering an authentication mechanism performed by means of features of the mobile device.

In an embodiment, the authentication is based on physiological characteristics, relating to the shape or composition of the body of a user, and/or on behavioral characteristics of a user, depending on the features of the mobile device.

In an embodiment, the client messaging application and the server messaging application refer to a same application based on a client server model and used by several users as a social messaging application.

In another implementation a middleware apparatus for authenticating a user of a client messaging application implemented in a mobile device and communicating with a server messaging application implemented in an application server through a wireless telecommunication network, the middleware operating between the client messaging application and the server messaging application. The middleware apparatus comprises:
means for monitoring the server messaging application for a received multimedia content,
means for sending a part of said received multimedia content to a control server for an analysis of the part of said multimedia content,
means for receiving results of the analyzed part of said multimedia content from the control server,
means for requesting an authentication of the user, if the received results are negative,
means for allowing the user to access the received multimedia content via the client messaging application if the authentication is successful

In another implementation a computer-readable medium having embodied thereon a computer program for executing a method for authenticating a user of a client messaging application implemented in a mobile device. Said computer program comprises instructions which carry out steps according to the method according to the invention.

### BRIEF DESCRIPTION OF THE FIGURES

The detailed description is described with reference to the accompanying figures. In the figures, the left-most digit(s) of a reference number identifies the figure in which the reference number first appears. The same numbers are used throughout the figures to reference like features and components. Some embodiments of system and/or methods in accordance with embodiments of the present subject matter are now described, by way of example only, and with reference to the accompanying figures, in which:
FIG. 1 illustrates a schematic block diagram of a communication system according to one embodiment of the invention for a method for authenticating a user of a client messaging application implemented in a mobile device.
FIG. 2 illustrates a flow chart illustrating a method for authenticating a user of a client messaging application implemented in a mobile device according to one embodiment of the invention.

The same reference number represents the same element or the same type of element on all drawings.

It should be appreciated by those skilled in the art that any block diagrams herein represent conceptual views of illustrative systems embodying the principles of the present subject matter. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

### DESCRIPTION OF EMBODIMENTS

The figures and the following description illustrate specific exemplary embodiments of the invention. It will thus be appreciated that those skilled in the art will be able to devise various arrangements that, although not explicitly described or shown herein, embody the principles of the invention and are included within the scope of the invention. Furthermore, any examples described herein are intended to aid in understanding the principles of the invention, and are to be construed as being without limitation to such specifically recited examples and conditions. As a result, the invention is not limited to the specific embodiments or examples described below, but by the claims and their equivalents.

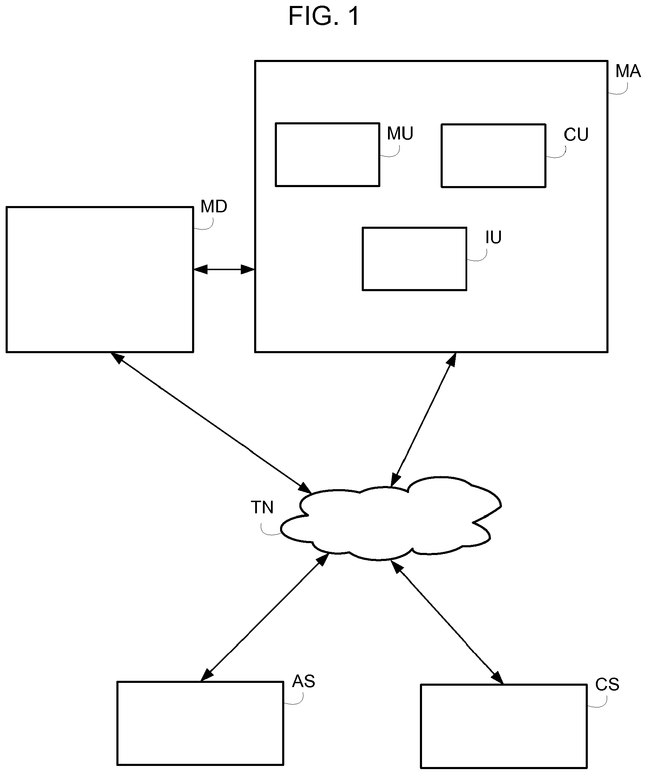

Referring to FIG. 1, a communication system comprises a mobile device MD, an application server AS, a control server CS and a middleware apparatus MA, communicating between them through a wireless telecommunication network TN.

The mobile device MD implements a client messaging application and is able to communicate with the application server implementing a server messaging application, via the middleware apparatus MA. The mobile device MD can be a mobile terminal, a laptop or other client device such as a smartphone, a tablet, able to communicate with the application server implementing through the wireless telecommunication network.

The wireless telecommunication network TN is for example a digital cellular radio communication network of the GPRS (General Packet Radio Service), UMTS (Universal Mobile Telecommunications System), CDMA (Code Division Multiple Access) type, LTE (Long Term Evolution) or even 5G (Fifth Generation) type. Furthermore, the wireless telecommunication network TN can be accessed by the mobile device via a wireless link, such as a Wi-Fi network or a Bluetooth link.

The client messaging application and the server messaging application both refer to a same application based on a client server model and used by several users as a social messaging application. It is assumed that the social messaging application presents features such as text chat, group chat and file sharing. In a classic social messaging application, when a user wishes to share a file, he/she can post the file in a discussion in a group chat and other users of the group chat will have access to the posted file by automatically downloading it or streaming it if the application is running or when they launch the application.

The middleware apparatus MA enables interoperability between client applications that run on different operating systems on different mobile devices, by supplying services so the client applications can exchange data in a standards-based way. In one embodiment, the middleware apparatus MA may be implemented in the mobile device MD. In another embodiment, the middleware apparatus MA may be implemented wireless telecommunication network TN.

The middleware apparatus MA includes an interface unit IU, a monitoring unit MU and a control unit CU.

The interface unit IU is used by the middleware apparatus MA to communicate with other entities like the mobile device, the application server and the control server, through the wireless telecommunication network.

The monitoring unit MU monitors the server messaging application for any received multimedia content relating to the user. The received multimedia content can correspond to any discussion the user is taking part in via the client messaging application. The multimedia content can contain video and/or audio data or an image for example.

Upon reception of such multimedia content, the monitoring unit MU interrogates the control server CS for an analysis of the multimedia content in order to further check if the multimedia content is acceptable or not to be viewed by the user.

The control server CS can receive a part of the multimedia content for an analysis of it. The part of the multimedia content can be a sample of it or attributes of it, or in case of video can be random frames of it. In one embodiment, the part of the multimedia content corresponds to the entire multimedia content.

The control server CS performs an analysis of the received part of multimedia content to provide results for example under the form of ratings or score. Depending on the nature of the multimedia content, the analysis can be performed by taking into account for example various comments, reviews or keywords related to the multimedia content and collected from Internet, the file size and format or other file attribute. Also the analysis can be performed by image recognition if the multimedia content is a video or an image, or eventually by voice recognition to extract the meaning of pronounced words in case of audio file. If the received multimedia content is a URL (Uniform Resource Locator), the control server CS can perform the same kind of analysis of the contents of the web page hosted by the URL.

The control unit CU receives results of the analysis of the multimedia content sent from the control server CS. If the received results are above a given threshold, the control unit CU requests an authentication of the user by means of the mobile device. The threshold is a user defined value to control multimedia content that can be available without authentication.

The nature of authentication mechanism depends on the characteristics of the mobile device that can offer different features for authentication. For example, the authentication is based on physiological characteristics, relating to the shape or composition of the body of a user, and/or on behavioral characteristics of a user. Examples of physiological characteristics used for biometric authentication include fingerprints, DNA, face, hand, retina or ear features; and odor. Examples of behavioral characteristics are related to the pattern of the behavior of a user, such as typing rhythm, gestures and voice. A typical gesture based authentication can require the user to create a unique pattern with help of nine points.

The kind of authentication mechanism may be defined by the user or an administrator of the client messaging application. It can be selected among different authentication mechanisms if the mobile device offers this possibility.

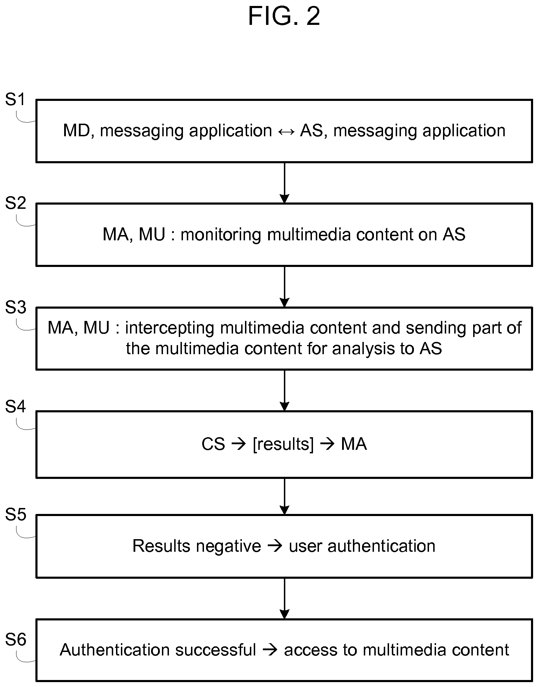

With reference to FIG. 2, a method for authenticating a user of a client messaging application implemented in a mobile device according to one embodiment of the invention comprises steps S1 to S6 executed within the communication system.

In step S1, the user launches a client messaging application on the mobile device MD. The client messaging application is running to exchange text or multimedia content with different users, eventually via different user groups, via different client messaging applications installed in different mobile devices communicating with the server messaging application running in the application server AS.

In step S2, the monitoring unit MU of the middleware apparatus MA monitors the server messaging application for any received multimedia content from any user group the user belongs to. To that end, the monitoring unit MU checks if a multimedia content was received by the server messaging application to be shared among a user group to which the user and another user having posted the multimedia content belong to.

In step S3, the multimedia content received by the server messaging application should be shared among the user group, and especially be sent to the client messaging application on the mobile device. The monitoring unit MU intercepts the multimedia content before being interpreted and displayed by the client messaging application. According to the nature of the multimedia content, the monitoring unit MU selects a part of the multimedia content for an analysis by the control server CS. The selected part should be sufficient so that the control server provides trust result. The monitoring unit MU then sends the selected part of the multimedia content to the control server CS.

In step S4, the control server CS performs an analysis of the received part of multimedia content to provide results interpretable by the middleware apparatus for example under the form of ratings or score. Once the analysis is over, the control server CS sends the results to the middleware apparatus MA.

In step S5, the control unit CU receives results of the analyzed part of the multimedia content from the control server. If the received results are negative, which means the received results are negative when the received results are above a given threshold or when the received results contain an indication for a required authentication, the control unit CU requests an authentication of the user by means of the mobile device. It means that the multimedia content contains potential inappropriate content that should not be displayed/played by client messaging application. If the received results are below the given threshold, the authentication is not required and the multimedia content can be displayed/played by the client messaging application.

The control unit CU triggers an authentication mechanism performed by means of features of the mobile device. The authentication can be based on physiological characteristics, relating to the shape or composition of the body of a user, and/or on behavioral characteristics of a user, depending on the features of the mobile device.

In step S6, if the authentication is a failure, the control unit CU blocks the downloading or playing of the multimedia content by the client messaging application. If the authentication is a success, the control unit CU allows the user to access the multimedia content by enabling the downloading or playing of the multimedia content by the client messaging application.

In one embodiment, the middleware apparatus MA intercepts the multimedia content before being displayed by the client messaging application and the display of a message prompting user authentication may occur before or after a downloading message of the multimedia content displayed in the client messaging application.

An embodiment comprises an apparatus comprising one or more processor(s), I/O interface(s), and a memory coupled to the processor(s). The processor(s) may be implemented as one or more microprocessors, microcomputers, microcontrollers, digital signal processors, central processing units, state machines, logic circuitries, and/or any devices that manipulate signals based on operational instructions. The processor(s) can be a single processing unit or a number of units, all of which could also include multiple computing units. Among other capabilities, the processor(s) are configured to fetch and execute computer-readable instructions stored in the memory.

The functions realized by the processor may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included.

The memory may include any computer-readable medium known in the art including, for example, volatile memory, such as static random access memory (SRAM) and dynamic random access memory (DRAM), and/or non-volatile memory, such as read only memory (ROM), erasable programmable ROM, flash memories, hard disks, optical disks, and magnetic tapes. The memory includes modules and data. The modules include routines, programs, objects, components, data structures, etc., which perform particular tasks or implement particular abstract data types. The data, amongst other things, serves as a repository for storing data processed, received, and generated by one or more of the modules.

A person skilled in the art will readily recognize that steps of the methods, presented above, can be performed by programmed computers. Herein, some embodiments are also intended to cover program storage devices, for example, digital data storage media, which are machine or computer readable and encode machine-executable or computer-executable programs of instructions, where said instructions perform some or all of the steps of the described method. The program storage devices may be, for example, digital memories, magnetic storage media, such as a magnetic disks and magnetic tapes, hard drives, or optically readable digital data storage media.

## Claims

1. A method for authenticating a user of a client messaging application implemented in a mobile device (MD) and communicating with a server messaging application implemented in an application server (AS) through a wireless telecommunication network (TN), the method comprising the following steps in a middleware apparatus (MA) operating between the client messaging application and the server messaging application, wherein the client messaging application is running to exchange multimedia content via different user groups via different client messaging applications installed in different mobile devices communicating with the server messaging application:
monitoring (S2) the server messaging application for a received multimedia content from at least one user group the user belongs to, to check if the multimedia content was received by the server messaging application to be shared among a user group to which the user and another user having shared the multimedia content belong to,
sending (S3) a part of said received multimedia content to a control server (CS) for an analysis of the part of said multimedia content,
receiving (S5) results of the analyzed part of said received multimedia content from the control server (CS),
if the received results are negative, requesting (S5) an authentication of the user,
if the authentication is successful, enabling the downloading or streaming of the multimedia content by the client messaging application,
if the authentication is a failure, blocking the downloading or streaming of the multimedia content by the client messaging application.

2. The method as claimed in claim 1, wherein the part of said received multimedia content corresponds to a sample of said received multimedia content, or corresponds to attributes of said received multimedia content, or corresponds to random frames of said received multimedia content in case this latter is a video.

3. The method as claimed in claim 1, wherein the part of the multimedia content corresponds to the entire multimedia content.

4. The method as claimed in claim 1 or 2, wherein requesting (S5) an authentication of the user comprises commanding the client messaging application in the mobile device to prompt the user to enter a password or a biometric input is associated with a plurality of parameters.

5. The method as claimed in any of the preceding claims, wherein the received results are negative when the received results are above a given threshold or when the received results contain an indication for a required authentication.

6. The method as claimed in any of the preceding claims, wherein the authentication of the user is requested by triggering an authentication mechanism performed by means of features of the mobile device.

7. The method as claimed in claims 6, wherein the authentication is based on physiological characteristics, relating to the shape or composition of the body of a user, and/or on behavioral characteristics of a user, depending on the features of the mobile device.

8. The method as claimed in any of the preceding claims, wherein the client messaging application and the server messaging application refer to a same application based on a client server model and used by several users as a social messaging application.

9. A middleware apparatus (MA) for authenticating a user of a client messaging application implemented in a mobile device (MD) and communicating with a server messaging application implemented in an application server (AS) through a wireless telecommunication network (TN), the middleware (MW) operating between the client messaging application and the server messaging application, wherein the client messaging application is running to exchange multimedia content via different user groups via different client messaging applications installed in different mobile devices communicating with the server messaging application, the middleware apparatus comprising:
means (MU) for monitoring the server messaging application for a received multimedia content from at least one user group the user belongs to, to check if the multimedia content was received by the server messaging application to be shared among a user group to which the user and another user having shared the multimedia content belong to,
means (MU) for sending a part of said received multimedia content to a control server (CS) for an analysis of the part of said multimedia content,
means (CU) for receiving results of the analyzed part of said received multimedia content from the control server (CS),
means (CU) for requesting an authentication of the user, if the received results are negative,
means (CU) for enabling the downloading or streaming of the multimedia content by the client messaging application if the authentication is successful and for blocking the downloading or streaming of the multimedia content by the client messaging application if the authentication is a failure.

10. A computer-readable medium having embodied thereon a computer program for executing a method for authenticating a user of a client messaging application according to any of claims 1 to 8.

## Patentansprüche

1. Verfahren zum Authentifizieren eines Benutzers einer Clientmessaginganwendung, die in einer mobilen Vorrichtung (MD) implementiert wird und über ein drahtloses Telekommunikationsnetzwerk (TN) mit einer Servermessaginganwendung kommuniziert, die in einem Anwendungsserver (AS) implementiert wird, wobei das Verfahren in einer Middlewareeinrichtung (MA), die zwischen der Clientmessaginganwendung und der Servermessaginganwendung betrieben wird, die folgenden Schritte umfasst, wobei die Clientmessaginganwendung läuft, um via verschiedene Benutzergruppen via verschiedene Clientmessaginganwendungen, die in verschiedenen mobilen Vorrichtungen installiert sind, die mit der Servermessaginganwendung kommunizieren, einen Multimediainhalt auszutauschen:
Überwachen (S2) der Servermessaginganwendung auf einen empfangenen Multimediainhalt von mindestens einer Benutzergruppe, zu der der Benutzer gehört, um zu prüfen, ob der Multimediainhalt von der Servermessaginganwendung empfangen wurde, um von einer Benutzergruppe gemeinsam verwendet zu werden, zu der der Benutzer und ein anderer Benutzer gehören, die den Multimediainhalt gemeinsam verwendet haben,
Senden (S3) eines Teils des empfangenen Multimediainhalts für eine Analyse des Teils des Multimediainhalts an einen Steuerserver (CS),
Empfangen (S5) von Ergebnissen des analysierten Teils des empfangenen Multimediainhalts vom Steuerserver (CS),
wenn die empfangenen Ergebnisse negativ sind, Anfordern (S5) einer Authentifizierung des Benutzers,
wenn die Authentifizierung erfolgreich ist, Ermöglichen des Herunterladens oder des Streamens des Multimediainhalts durch die Clientmessaginganwendung,
wenn die Authentifizierung fehlgeschlagen ist, Unterbinden des Herunterladens oder des Streamens des Multimediainhalts durch die Clientmessaginganwendung.

2. Verfahren nach Anspruch 1, wobei der Teil des empfangenen Multimediainhalts einem Beispiel des empfangenen Multimediainhalts oder Attributen des empfangenen Multimediainhalts oder zufälligen Frames des empfangenen Multimediainhalts entspricht, sofern letzterer ein Video ist.

3. Verfahren nach Anspruch 1, wobei der Teil des Multimediainhalts dem gesamten Multimediainhalt entspricht.

4. Verfahren nach Anspruch 1 oder 2, wobei das Anfordern (S5) einer Authentifizierung des Benutzers das Anweisen der Clientmessaginganwendung in der mobilen Vorrichtung umfasst, den Benutzer aufzufordern, ein Passwort einzugeben, oder eine biometrische Eingabe mit einer Vielzahl von Parametern verknüpft ist.

5. Verfahren nach einem der vorhergehenden Ansprüche, wobei die empfangenen Ergebnisse negativ sind, wenn die empfangenen Ergebnisse über einem gegebenen Schwellwert liegen oder wenn die empfangenen Ergebnisse eine Anzeige für eine erforderliche Authentifizierung enthalten.

6. Verfahren nach einem der vorhergehenden Ansprüche, wobei die Authentifizierung des Benutzers durch Auslösen eines Authentifizierungsmechanismus angefordert wird, das mit Merkmalen der mobilen Vorrichtung durchgeführt wird.

7. Verfahren nach Anspruch 6, wobei die Authentifizierung in Abhängigkeit von den Merkmalen der mobilen Vorrichtung auf physiologischen Eigenschaften, die die Form oder den Aufbau des Körpers eines Benutzers betreffen, und/oder auf Verhaltenseigenschaften eines Benutzers basiert.

8. Verfahren nach einem der vorhergehenden Ansprüche, wobei sich die Clientmessaginganwendung und die Servermessaginganwendung auf eine selbe Anwendung beziehen, die auf einem Client-Server-Modell basiert und von mehreren Benutzern als eine soziale Messaginganwendung verwendet wird.

9. Middlewareeinrichtung (MA) zum Authentifizieren eines Benutzers einer Clientmessaginganwendung, die in einer mobilen Vorrichtung (MD) implementiert wird und über ein drahtloses Telekommunikationsnetzwerk (TN) mit einer Servermessaginganwendung kommuniziert, die in einem Anwendungsserver (AS) implementiert wird, wobei die Middleware (MW) zwischen der Clientmessaginganwendung und der Servermessaginganwendung betrieben wird, wobei die Clientmessaginganwendung läuft, um via verschiedene Benutzergruppen via verschiedene Clientmessaginganwendungen, die in verschiedenen mobilen Vorrichtungen installiert sind, die mit der Servermessaginganwendung kommunizieren, einen Multimediainhalt auszutauschen, wobei die Middlewareeinrichtung Folgendes umfasst:
Mittel (MU) zum Überwachen der Servermessaginganwendung auf einen empfangenen Multimediainhalt von mindestens einer Benutzergruppe, zu der der Benutzer gehört, um zu prüfen, ob der Multimediainhalt von der Servermessaginganwendung empfangen wurde, um von einer Benutzergruppe gemeinsam verwendet zu werden, zu der der Benutzer und ein anderer Benutzer gehören, die den Multimediainhalt gemeinsam verwendet haben,
Mittel (MU) zum Senden eines Teils des empfangenen Multimediainhalts für eine Analyse des Teils des Multimediainhalts an einen Steuerserver (CS),
Mittel (CU) zum Empfangen von Ergebnissen des analysierten Teils des empfangenen Multimediainhalts vom Steuerserver (CS),
Mittel (CU) zum Anfordern einer Authentifizierung des Benutzers, wenn die empfangenen Ergebnisse negativ sind,
Mittel (CU) zum Ermöglichen des Herunterladens oder des Streamens des Multimediainhalts durch die Clientmessaginganwendung, wenn die Authentifizierung erfolgreich ist, und zum Unterbinden des Herunterladens oder des Streamens des Multimediainhalts durch die Clientmessaginganwendung, wenn die Authentifizierung fehlschlägt.

10. Computerlesbares Medium, auf dem sich ein Computerprogramm zum Ausführen eines Verfahrens zum Authentifizieren eines Benutzers einer Clientmessaginganwendung gemäß einem der Ansprüche 1 bis 8 befindet.

## Revendications

1. Procédé pour authentifier un utilisateur d'une application de messagerie client mise en œuvre dans un dispositif mobile (MD) et communiquant avec une application de messagerie serveur mise en œuvre dans un serveur d'application (AS) à travers un réseau de télécommunication sans fil (TN), le procédé comprenant les étapes suivantes, dans un appareil à logiciel médiateur (MA) fonctionnant entre l'application de messagerie client et l'application de messagerie serveur, dans lequel l'application de messagerie client est en exécution pour échanger un contenu multimédia via différents groupes d'utilisateurs via différentes applications de messagerie client installées dans différents dispositifs mobiles communiquant avec l'application de messagerie serveur :
surveiller (S2) l'application de messagerie serveur pour un contenu multimédia reçu d'au moins un groupe d'utilisateurs auquel l'utilisateur appartient, afin de vérifier si le contenu multimédia a été reçu par l'application de messagerie serveur pour être partagé avec un groupe d'utilisateurs auquel appartiennent l'utilisateur et un autre utilisateur ayant partagé le contenu multimédia,
envoyer (S3) une partie dudit contenu multimédia reçu à un serveur de commande (CS) pour une analyse de la partie dudit contenu multimédia,
recevoir (S5) des résultats de la partie analysée dudit contenu multimédia reçu du serveur de commande (CS),
si les résultats reçus sont négatifs, demander (S5) une authentification de l'utilisateur,
si l'authentification est réussie, permettre le téléchargement ou la diffusion en continu du contenu multimédia par l'application de messagerie client,
si l'authentification échoue, bloquer le téléchargement ou la diffusion en continu du contenu multimédia par l'application de messagerie client.

2. Procédé selon la revendication 1, dans lequel la partie dudit contenu multimédia reçu correspond à un échantillon dudit contenu multimédia reçu, ou correspond à des attributs dudit contenu multimédia reçu, ou correspond à des images aléatoires dudit contenu multimédia reçu dans le cas où ce dernier est une vidéo.

3. Procédé selon la revendication 1, dans lequel la partie du contenu multimédia correspond à la totalité du contenu multimédia.

4. Procédé selon la revendication 1 ou 2, dans lequel la demande (S5) d'une authentification de l'utilisateur comprend un ordre donné à l'application de messagerie client dans le dispositif mobile d'inviter l'utilisateur à saisir un mot de passe, ou une donnée biométrique est associée à une pluralité de paramètres.

5. Procédé selon l'une des revendications précédentes, dans lequel les résultats reçus sont négatifs lorsque les résultats reçus sont supérieurs à un seuil donné ou lorsque les résultats reçus contiennent une indication d'une authentification requise.

6. Procédé selon l'une des revendications précédentes, dans lequel l'authentification de l'utilisateur est demandée en déclenchant un mécanisme d'authentification réalisé au moyen de caractéristiques du dispositif mobile.

7. Procédé selon la revendication 6, dans lequel l'authentification est basée sur des caractéristiques physiologiques relatives à la forme ou à la composition du corps d'un utilisateur, et/ou sur des caractéristiques comportementales d'un utilisateur, en fonction des caractéristiques du dispositif mobile.

8. Procédé selon l'une des revendications précédentes, dans lequel l'application de messagerie client et l'application de messagerie serveur font référence à une même application basée sur un modèle client-serveur et utilisée par plusieurs utilisateurs en tant qu'application de messagerie sociale.

9. Appareil à logiciel médiateur (MA) pour authentifier un utilisateur d'une application de messagerie client mise en œuvre dans un dispositif mobile (MD) et communiquant avec une application de messagerie serveur mise en œuvre dans un serveur d'application (AS) à travers un réseau de télécommunication sans fil (TN), le logiciel médiateur (MW) fonctionnant entre l'application de messagerie client et l'application de messagerie serveur, dans lequel l'application de messagerie client est en exécution pour échanger un contenu multimédia via différents groupes d'utilisateurs via différentes applications de messagerie client installées dans différents dispositifs mobiles communiquant avec l'application de messagerie serveur, l'appareil à logiciel médiateur comprenant :
des moyens (MU) pour surveiller l'application de messagerie serveur pour un contenu multimédia reçu d'au moins un groupe d'utilisateurs auquel l'utilisateur appartient, afin de vérifier si le contenu multimédia a été reçu par l'application de messagerie serveur pour être partagé avec un groupe d'utilisateurs auquel appartiennent l'utilisateur et un autre utilisateur ayant partagé le contenu multimédia,
des moyens (MU) pour envoyer une partie dudit contenu multimédia reçu à un serveur de commande (CS) pour une analyse de la partie dudit contenu multimédia,
des moyens (CU) pour recevoir des résultats de la partie analysée dudit contenu multimédia reçu du serveur de commande (CS),
des moyens (CU) pour demander une authentification de l'utilisateur, si les résultats reçus sont négatifs,
des moyens (CU) pour permettre le téléchargement ou la diffusion en continu du contenu multimédia par l'application de messagerie client si l'authentification est réussie et pour bloquer le téléchargement ou la diffusion en continu du contenu multimédia par l'application de messagerie client si l'authentification échoue.

10. Support lisible par ordinateur sur lequel est incorporé un programme informatique pour l'exécution d'un procédé pour authentifier un utilisateur d'une application de messagerie client selon l'une des revendications 1 à 8.
